# EUROPEAN PATENT SPECIFICATION

(11) **EP 3 433 434 B1**
(45) Date of publication and mention of the grant of the patent: **17.04.2024**
(21) Application number: 16716173.6
(22) Date of filing: 24.03.2016
(51) Int. Cl.: F15B 21/08, F04B 41/00, F15B 13/08

(54) **SMART POWER UNIT, HYDRAULIC SYSTEM AND OPERATION METHOD OF THE SYSTEM**
INTELLIGENTE ANTRIEBSEINHEIT, HYDRAULISCHES SYSTEM UND BETRIEBSVERFAHREN FÜR DAS SYSTEM
UNITÉ D'ALIMENTATION INTELLIGENTE, SYSTÈME HYDRAULIQUE ET PROCÉDÉ DE FONCTIONNEMENT DU SYSTÈME

(43) Date of publication of application: 30.01.2019
(73) Proprietor: Hydronit S.r.l., 20814 Varedo (MB) (IT)
(72) Inventor: ALFIERI, Gianluca, 20814 Varedo (MB) (IT); GAMBUSERA, Andrea, 20814 Varedo (MB) (IT)
(74) Representative: Longoni, Alessandra
(86) International application number: PCT/EP2016/056622
(87) International publication number: WO 2017/162298

(56) References cited:
- EP-A1- 2 347 988
- WO-A1-2009/145681
- GB-A- 2 364 396
- US-A1- 2011 208 362
- US-A1- 2012 216 518
- US-A1- 2014 345 265

## Description

### Technical Field

The present invention relates, in general, to a hydraulic system which comprises a smart power unit arranged to control the system.

In particular, present invention relates to a Smart Power Unit also named SPU arranged to control the hydraulic system by way of on board electronic circuits.

### Background Art

Hydraulic systems comprising pump stations are known in many and different fields of technology.
The known hydraulic systems may comprise pump stations having power ranging from 0.15 kW to 7.5 kW and electric control units arranged to control pumps or systems.
In the field of hydraulic systems, for instance, document CN_102566541_A discloses an electric control system or unit of a hydraulic station which includes a power source, a control module and a working module in signal connection with the control module.
According to the known document, the working module includes a heater, an electromagnetic water valve, and an oil pump motor set, wherein the oil pump motor set includes a first oil pump motor, a second oil pump motor and a third oil pump motor.
Moreover, according to the known document, the control module includes a PLC (programmable logic control) unit, a heater failure control unit for protecting the heater, an oil pump failure control unit for protecting the oil pump motor set and an oil level/temperature control unit.
The known electric control system is arranged, in particular, to protect the oil pump motor set as well as to control level and temperature of oil.

According to the known document, the electric control system comprises a very limited number of features and is arranged, in particular, to protect the oil pump motor set by controlling level and temperature of oil.
As a matter of fact, the features of the known electric control system seem strictly linked to pump features and not flexible enough to be integrated in complex and different hydraulic systems.

As a matter of fact, a problem exists if the known electric control system needs to be integrated in hydraulic systems requiring, for instance, further devices.
As a matter of fact the features of the known electric control system are not enough flexible to be easily integrated in and applicable to complex hydraulic systems and, prima facie, strong engineering effort would be required to adapt the known electric control system to complex hydraulic systems in different fields of technology.

In the field of hydraulic systems having a power in a range higher that 7.5 kW it is also known document US_2014/345265_A1. Such a document discloses an hydraulic drive system comprising, inter alia, a discharge pressure reducing unit arranged to reduce the discharge pressure of a charge pump applied to one cylinder. The above system is very complex and requires one reversible closed loop main pump connected to a switching valve respectively connected to the cylinder.

In the field of hydraulic systems having a power in a range higher that 7.5 kW it is also known document EP_2347988_A1.

This document discloses a device to control actively the vibrations of an articulated arm to pump concrete.

The known device is configured as a hydraulic open loop circuit and comprises a plurality of control portions arranged to actively control, by way of respective safety parts the vibrations of the articulated arm.

In particular, each safety part is arranged to modify the configuration of respective pairs of actuators applied to the articulated arm by using a pair of pumps.

According to this known device, the safety part only relates to the configuration of respective pair of actuators applied to the articulated arm to pump concrete.

In the field of electric actuators it is known from document GB_2364396_A an electric actuator system for subsea environment. Such a document teaches, inter alia, that each actuator contains at least one electric motor, at least one electrical storage unit and a control unit.

The control unit contains switching means for controlling the power to the motor and an intelligent processor which receives signals relating to the electrical storage unit.

Applicant, in general, has noted that known hydraulic systems are not flexible and require electric control units more flexible.
Moreover, Applicant has noted that known electric control units of hydraulic systems do not effectively solve the problem to be very flexible and such to be simply integrated in complex and different hydraulic systems.

### Disclosure of the Invention

The object of the present invention is thus to solve the problems outlined above.

According to present invention, such an object is achieved by means of a smart power unit according to claim 1 and a hydraulic system according to claim 5.

The present invention also relates to an operation method of the system according to claim 8.

<<<2

### Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:
Fig. 1 shows an external view of parts of a hydraulic system according to the invention;
Fig. 2 schematically shows a general block diagram of the hydraulic system according to the invention;
Fig. 3 schematically shows a detailed block diagram of one embodiment of the hydraulic system;

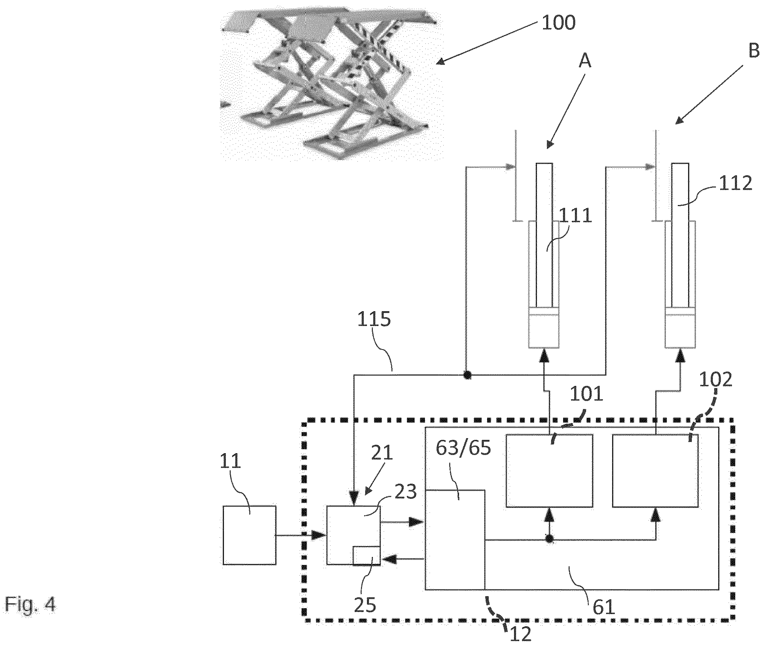

Fig. 4 shows a first installation example of the hydraulic system of Fig. 2; and

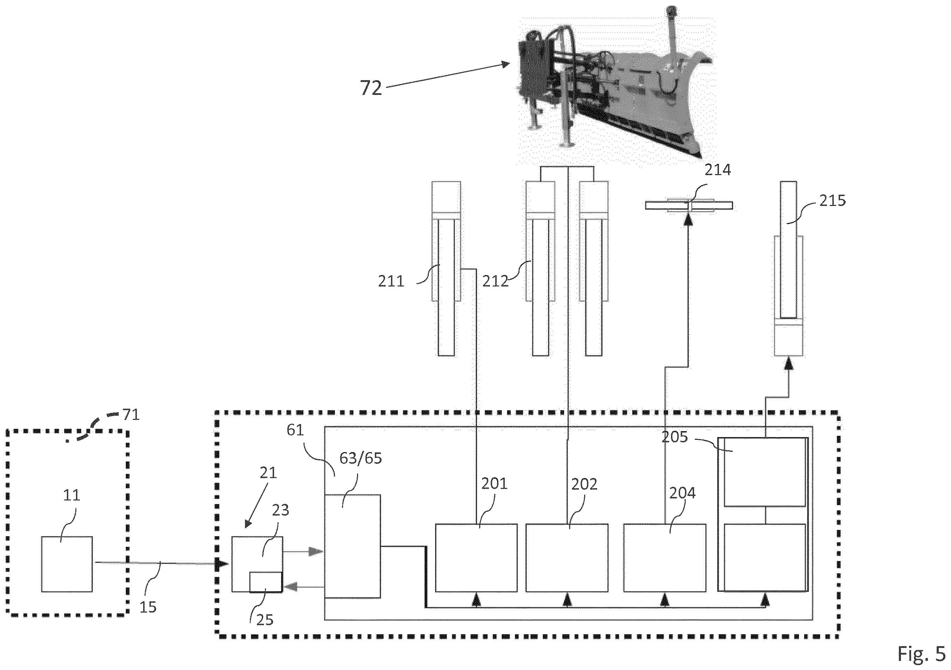

Fig. 5 shows a second installation example of the hydraulic system of Fig. 2.

### Best Modes for Carrying Out the Invention

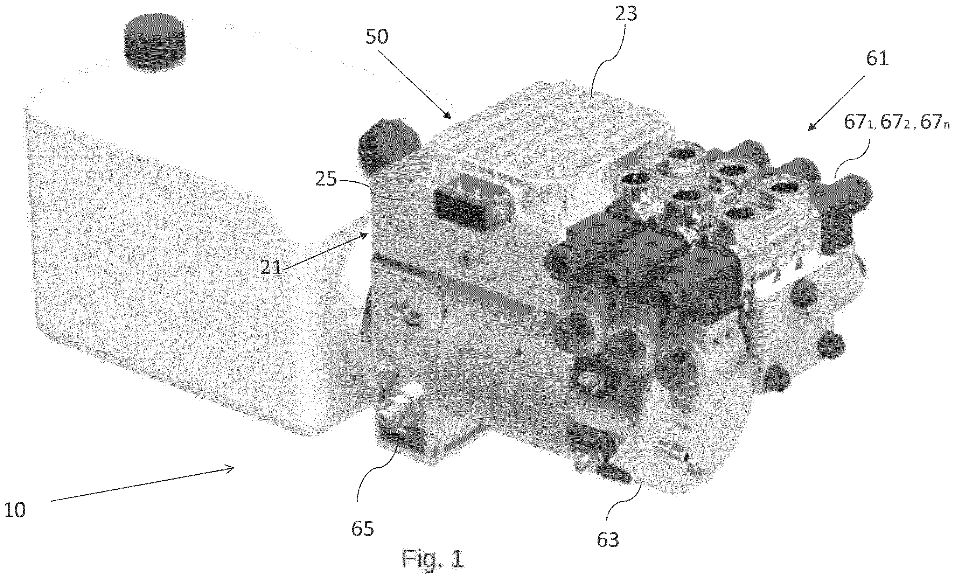

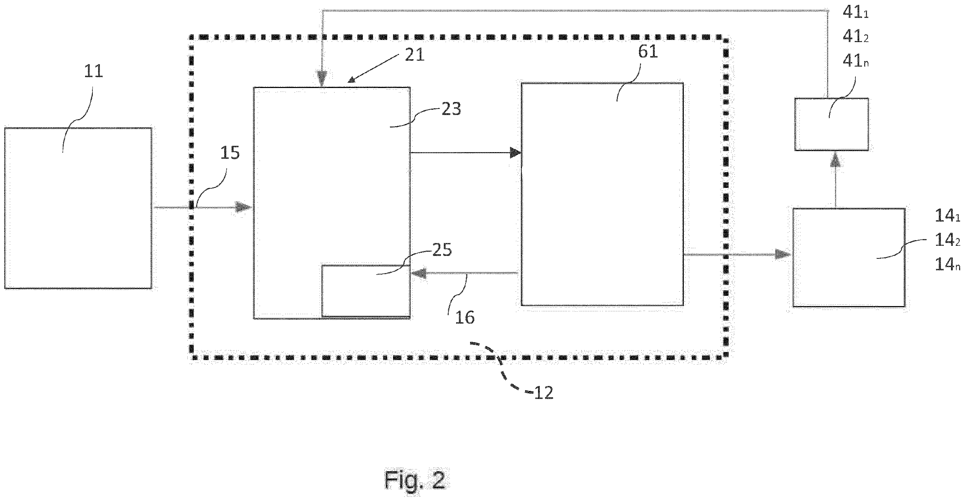

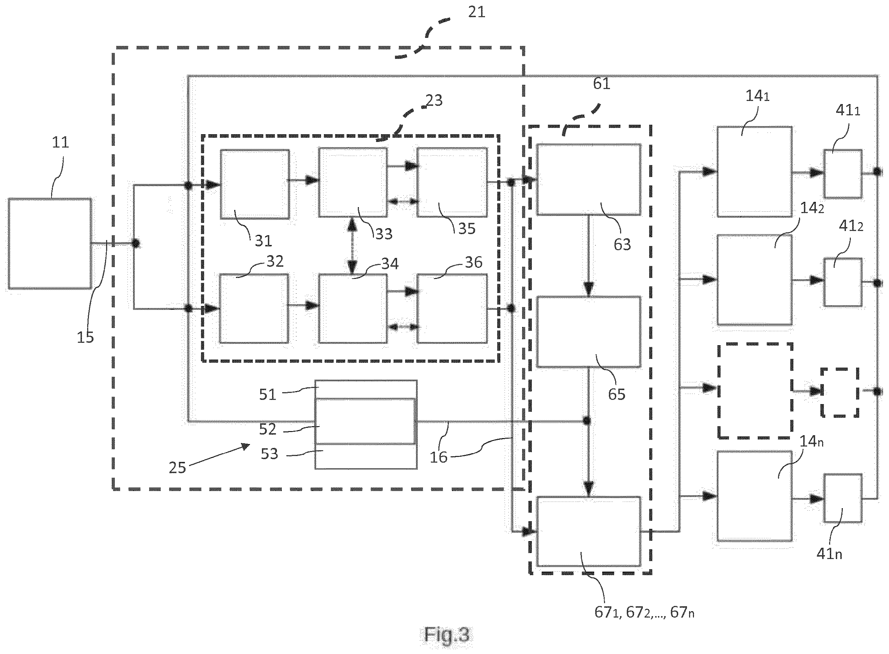

With reference to Fig. 1 a hydraulic system 10 according to present invention comprises a smart power unit or SPU 12, one or more actuators 141, 142, ..., 14n, (Fig. 1, Fig. 2, Fig. 3), connected or associated to respective sensors 411, 412, ..., 41n, and a human machine interface or HMI 11.

The hydraulic system 10 is arranged to be used by an operator in a machine or an electro-mechanic system or device to perform, for instance, motion/control activities. The HMI 11 is an operator interface, is connected to the SPU 12, and is arranged, for instance, to enable or disable functions, set values and/or limits, communicate warnings and/or alarms.

The HMI 11 comprises, for instance, START/STOP switches, joysticks, potentiometers, or any kind of components arranged to send commands to or receive information from SPU 12.

According to further embodiments, the HMI 11 further comprises a display arranged to display commands or status of commands sent to the SPU 12 as well as information, warnings or alarms received by the SPU 12.

According to the preferred embodiment the HMI 11 is connected to the SPU 12 by way of a BUS or a network (BUS) 15, for instance a CAN (Controller Area Network) BUS of known type or a wired or wireless network of known type.

The SPU (Smart Power Unit) 12, according to the invention, comprises a hydraulic process computer or HPC 21. According to a preferred embodiment, HPC 21 is connected to the HMI 11 by way of the BUS 15, and a hydraulic power pack or HPP 61 connected, preferably by way of input/output wires 16, to the HPC 21.

The HPC 21 according to the invention comprises a programmable computer board (computer board) 23 and a sensor board 25 directly connected to the computer board 23.

In particular, the computer board 23, according to the preferred embodiment of present invention, is comprised in a body 50, for instance a waterproof body, and the sensor board (hydraulic manifold) 25 is arranged to shape one side of the body 50.

The computer board 23, according to the preferred embodiment, comprises a Safety Architecture arranged to provide a relative level of risk-reduction features.

For instance the Safety Architecture may comprise a known type SIL (Safety Integrity Level) 2 architecture, in order to provide a relative level of risk-reduction to the operation of the SPU 12 and of the hydraulic system 10.

Preferably, the computer board 23 comprises, for instance, a first 31 and a second input array 32 each associated to a respective first 33 and second logic processor 34 in cascade connection to a respective first 35 and second output 36.

The first 35 and second output 36, for instance first and second power outputs, are arranged to directly drive components comprised into the HPP 61, as for instance solenoid operated proportional or on-off valves 671, 672, ..., 67n without the need of external devices.

According to the preferred architecture, the first 33 and second logic processor 34 are programmable and are arranged to be customized to the machine or to the electro-mechanic system or device where the hydraulic system 10 is installed. Preferably the first 33 and second logic processor 34 are communicating each other and are arranged to operate a cross and redundancy check of received information. For instance the communication between the first 33 and second logic processor 34 is made according to the SIL 2 architecture..

According to further embodiments the computer board 23 is programmable but comprises an architecture with only one input array, one logic processor and one output and is configured for providing, in any case, a certain safety integrity level corresponding to a certain risk-reduction.

The sensor board or hydraulic manifold 25, according to the invention, comprises, for instance, one pressure sensor 51, one temperature sensor 52 and a return-line hydraulic flow sensor 53 or at least one type of the above sensors and is connected to the computer board 23 by way of input ports of input arrays 31, 32.

Preferably, the computer board 23 is laying on the hydraulic manifold 25 and is arranged to read sensors 51, 52 or 53 by way of the input ports.

In summary, according to the preferred embodiment of present invention, the sensor board or hydraulic manifold 25 comprises one or more sensors 51, 52 or 53, and is arranged to shape, for instance, a waterproof side of the body 50 including the computer board 23.

The sensor board, in general, is arranged to sense operation parameters of the HPP 61 and is strongly connected to the computer board 23.

The HPP 61 is comprised of a hydraulic power pack, for instance a mini or micro power pack, and is directly controlled by the HPC 21.

According to the preferred embodiment of present invention the HPP 61 comprises one or more of the following components:
- an electric motor 63 sized upon the hydraulic system 10 necessities, for instance both an AC or a DC type motor, controlled by the HPC 21;
- a hydraulic pump 65 sized upon the system necessities, and driven by the electric motor 63 by way of a connection of know type;
- one or more valves 671, 672, ..., 67n selected and applied in order to meet hydraulic system requirements, connected in known way to the pump 65, and controlled by the HPC 21; Valves 671, 672, ..., 67n may further comprise security valves arranged to meet security requirements of the hydraulic system. One or more of valves 671, 672, ..., 67n of the HPP 61, preferably, are directly connected to respective actuators 141, 142, ..., 14n by way, for instance, of one or two respective pipes and are arranged to directly manage the respective actuators 141, 142, ..., 14n.

The actuators 141, 142, ..., or 14n may be of linear type (cylinders) or of rotary type (motors), known per se.

According to the preferred embodiment actuators 141, 142, ..., or 14n comprise or are associated to respective sensors 411, 412, ..., 41n, for instance position, force, or angle type integral sensors.

Preferably, each sensor 411, 412, ..., or 41n, is arranged to send feedback information by way of input arrays, 31, 32, to the HPC 21 that is configured for performing motion/force control of the actuators 141, 142, ..., or 14n in closed loop through valves 671, 672, ..., 67n.

According to further embodiments the integral sensors 411, 412, ..., or 41n, are totally or partially missing and/or are distributed in different parts of the machine or of the electro-mechanic system or device.

Operation of the hydraulic system 10 according to the preferred embodiment disclosed above is the following.

HMI 11 is mainly arranged to send operative instructions to SPU 12 by way of the BUS 15.

Thanks to such an architecture the HMI 11 may be located near the operator, for instance in a cabin, and SPU 12 may be located far from the HMI 11 and near the electro-mechanic system or device, without requiring very long and complex cables.

Following the operative instructions, the HPC 21 is arranged to directly send respective commands to the electric motor 63 and, by way of the valves 671, 672, ..., 67n, to the actuators 141, 142, ..., or 14n.

Thanks to such an architecture the hydraulic system 10 does not require relays and switches located far from the HPP 61 for controlling the machine or the electro-mechanic system or device and the HPP 61 of the SPU 12 is arranged to directly control actuators 141, 142, ..., or 14n.

In use, the sensor board 25, being preferably integrated in or waterproof connected to the body 50, is arranged to directly feedback operation parameters of the pump 65 or of the HPP 61 to the computer board 23 and/or to the HMI 11.

Thanks to such high level of integration, for instance pump operation parameters are promptly recognised and managed by the computer board 23 and/or displayed by the HMI 11.

Sensors 411, 412, ..., or 41n, associated to the actuators 141, 142, ..., or 14n are arranged to send feedback information in closed loop to the computer board 23 so that any abnormality may be recognised and managed.

In particular, in case that the computer board comprises at least two logic processors configured according to a safety architecture implementing level 2 risk-reduction features, any abnormality is evaluated and managed by two logic processors in parallel.

In order to better clarify operation of the hydraulic system 10, two examples of possible installation of the SPU according to present invention are shown.

A first example relates to a SPU installed in a electrohydraulic twin-scissor lift 100 for vehicles comprising a master cylinder 111 and a slave cylinder 112.

According to known prior art, a twin-scissor lift is normally developed on a principle of "emitter" and "receiver" slave cylinders.

The emitter cylinder is mechanically connected to a master cylinder located in a platform A which drives the platform out (while lifting) or in (while lowering).

The emitter cylinder pumps oil on the receiver slave cylinder located in platform B which drives the scissor.

Eventual unbalanced load is compensated by a torsion bar.

Therefore, according to known prior art, the conventional twin-scissor lift comprises three cylinders:
- an emitter cylinder,
- a receiver cylinder, and
- a master cylinder.

On the contrary, the SPU 12 of present invention, applied to a twin-scissor lift 100, may replaces the emitter and receiver hydraulic cylinders and the torsion bar by way of a single cylinder (slave cylinder) 112 of the same size of the master cylinder 111. As a matter of fact, the computer board 23, thanks to the fact that it is of programmable type, may be configured to synchronise the position of the slave cylinder 112 to the position the master cylinder 111 by conveniently managing signals of a sensor 115 sending back information from cylinders 111 and 112 to the computer board 23.

Therefore, the SPU 12 may be configured to drive only two cylinders.

The slave cylinder 112 is driven, for instance by a 3/2 proportional valve 102 comprised into the HPP 61.

According to the example the sensor 115, for instance, is a rotative potentiometer, arranged to determine the actual scissor height.

Moreover, according to the example, the HPC 21 of the SPU 12 is arranged to manage lifting lowering of the master cylinder and parallelism of the slave cylinder through respective proportional valves 101, 102.

Advantageously, the SPU 12 allows to reduce manufacturing costs and manpower, simplifies the mechanical solution and reduces hardware materials and spare parts.

A second example relates to a SPU installed, for instance, in a snowplow comprising a cabin 71 and at least one blade controlled by an electro-mechanic device 72.

According to known prior art, a snowplow is normally powered by a conventional hydraulic power pack driven by an electro-mechanic system by way of relays and switches.

Therefore in the vehicle cabin a control panel remotely controls the electro-mechanic device.

The electro-mechanic device, according to prior art, requires at least one wire per each function and other three wires for power. In summary, a fully equipped snowplow can comprise a twenty poles cable for connecting the control panel to the electro-mechanic device; such a cable requires hard work to be driven from inside the cabin to the blade of the snowplow and also requires chassis modification and expansive multiway connectors.

On the contrary, a snowplow designed so as to comprise a SPU 12 according to present invention, comprises, for instance, the HMI 11 located into the cabin 71. The HMI 11 is arranged to manage all the snowplow functions by way of the SPU 12 located near the electro-mechanic device 72 and connected to the HMI 11 through the BUS 15, for instance through the CAN-BUS.

Therefore, advantageously, the hydraulic system according to present invention, when applied to a snowplow requires:
- Minor chassis modification of the snowplow, i.e. less manufacturing costs;
- Lower connectors cost;
- Smaller design effort.

In addition, according to further features of the preferred embodiment of present invention, the direct connection of the SPU to actuators of the snowplow, for instance a scraper 211, a first and second outrigger 212, an orient 214 and a lift/low 215 through respective valves 201, 202, 204 and 205 comprised into the HPP 61, is such to grant:
- very high serviceability.

Moreover, the SPU 12, by preferably comprising the sensor board 25 tightly connected to the computer board 23, is such to grant when installed in a snowplow:
- very effective diagnostic features.

## Claims

1. A smart power unit (12) arranged for managing a hydraulic system (10), said smart power unit comprising
- a hydraulic power pack (61) comprising
-- a hydraulic open circuit type pump (65) and
-- an electric motor (63) arranged to drive the hydraulic pump,
- a hydraulic process computer (21) comprising integrated therein
-- a programmable computer board (23), and
-- a sensor board (25) directly connected to the programmable computer board and comprising first one or more sensors (51-.53) arranged to sense operation parameters of the pump and to directly feedback operation parameters of the pump to the programmable computer board, wherein
- said hydraulic process computer is arranged to control said electric motor.

2. The smart power unit according to claim 1 wherein
said hydraulic power pack further comprises a plurality of hydraulic valves (61₁, 67₂, ..., 67ₙ) directly connected to the pump, and
wherein said plurality of valves are controlled by said hydraulic process computer.

3. The smart power unit according to claim 2 wherein said programmable computer board comprises
a first and second programmable logic processors (33, 34) and
a first and a second input arrays (31, 32) each respectively associated to the first and second programmable logic processors,
the first and second programmable logic processors communicating with each other and arranged to operate a cross and redundancy check of the feedback information received by way of the first and second input array.

4. The smart power unit according to claim 2 or 3 wherein
said computer board is comprised in a waterproof body (50), and
said sensor board is configured to shape one side of said waterproof body.

5. A hydraulic system (10) comprising:
the smart-power unit (12) according to any one of claims 2-4,
said hydraulic power pack (61) having a power ranging from 0.15 kW to 7.5 kW and
said hydraulic power pack (61) being arranged to hydraulically manage, by way of direct hydraulic connections, a plurality of respective hydraulic actuators.

6. The hydraulic system according to claim 5, wherein
said plurality of hydraulic respective actuators is associated to second respective sensors arranged to send feedback information of the actuators to said hydraulic process computer, computer (21), and
said hydraulic process computer (21) is configured for performing motion/force control of the plurality of respective hydraulic actuators on the basis of said feedback information and in closed loop, by way of said valves (61₁, 67₂, ..., 67ₙ).

7. The hydraulic system according to claim 5 or 6, further comprising:
a human machine interface (11) arranged to enable or disable functions, set values and/or limits, communicate warnings and/or alarms,
a BUS connection (15) arranged to connect said human machine interface to said hydraulic process computer.

8. An operation method of a hydraulic system comprising the steps of:
- providing a hydraulic power pack having a power ranging from 0.15 kW to 7.5 kW and comprising
- a hydraulic open circuit type pump,
- a plurality of hydraulic valves directly connected to the hydraulic open circuit type pump;
- providing a hydraulic process computer comprising integrated therein,
- a programmable computer board, and
- a sensor board directly connected to the programmable computer board and comprising one or more sensors arranged to sense operation parameters of the pump and to directly feedback operation parameters of the pump to the programmable computer board, said hydraulic process computer being arranged to control said hydraulic open circuit type pump and said plurality of valves,
- providing a plurality of hydraulic actuators directly and respectively connected to said plurality of valves,
- directly managing said plurality of actuators by way of said plurality of valves.

9. The method according to claim 8 further comprising the steps of:
- providing a plurality of actuator sensors (411, 412, ..., 41n) respectively associated to said plurality of actuators (141, 142, ..., 14n) for sending feedback information from said plurality of actuator sensors to said hydraulic process computer (21),
- performing motion/force control of the plurality of actuators (141, 142, ..., 14n) in closed loop by way of said plurality of valves (671, 672, ..., 67n) under control of said hydraulic process computer (21).

10. The method according to claim 8 or 9, further comprising the steps of:
- connecting a human machine interface (11), arranged to enable or disable functions, set values and/or limits, communicate warnings and/or alarms, to said hydraulic process computer (21) by way of a BUS connection (15).

11. The method according to any one of claims 8 to 10, wherein the steps of:
- providing said hydraulic process computer (21), comprising integrated therein the programmable computer board (23) and the sensor board (23), comprises the step of providing a first and a second input array (31, 32) each respectively associated to a first and second programmable logic processor (33, 34) communicating each other and arranged to operate a cross and redundancy check of the feedback information received by way of the first and second input array (31, 32).

12. The method according to any one of claims 8 to 11, wherein the step of:
- providing a hydraulic process computer (21) comprises the steps of:
- providing the computer board (23) so as to be comprised in a waterproof body and said sensor board (25) so as to shape one side of the waterproof body (50).

## Patentansprüche

1. Intelligente Antriebseinheit (12), die zum Verwalten eines hydraulischen Systems (10) angeordnet ist, wobei die intelligente Antriebseinheit Folgendes umfasst:
- ein Hydraulikaggregat (61), das Folgendes umfasst:
-- eine Hydraulikpumpe (65) vom Typ mit offenem Kreislauf und
-- einen Elektromotor (63), der so angeordnet ist, dass er die Hydraulikpumpe antreibt,
- einen hydraulischen Prozesscomputer (21), der darin integriert Folgendes umfasst:
-- eine programmierbare Computerplatine (23) und
-- eine Sensorplatine (25), die direkt mit der programmierbaren Computerplatine verbunden ist und einen ersten oder mehrere erste Sensoren (51-53) umfasst, die so angeordnet sind, dass sie Betriebsparameter der Pumpe erfassen und Betriebsparameter der Pumpe direkt an die programmierbare Computerplatine zurückmelden,
wobei
- der hydraulische Prozesscomputer so angeordnet ist, dass er den Elektromotor steuert.

2. Intelligente Antriebseinheit nach Anspruch 1, wobei
das Hydraulikaggregat ferner eine Vielzahl von Hydraulikventilen (61₁, 67₂, ..., 67ₙ) umfasst, die direkt mit der Pumpe verbunden sind, und
wobei die Vielzahl von Ventilen durch den hydraulischen Prozesscomputer gesteuert wird.

3. Intelligente Antriebseinheit nach Anspruch 2, wobei die programmierbare Computerplatine Folgendes umfasst:
einen ersten und einen zweiten programmierbaren Logikprozessor (33, 34) und
ein erstes und ein zweites Eingangsarray (31, 32), die jeweils dem ersten und dem zweiten programmierbaren Logikprozessor zugeordnet sind,
wobei der erste und der zweite programmierbare Logikprozessor miteinander kommunizieren und so angeordnet sind, dass sie eine Kreuz- und Redundanzprüfung der über das erste und das zweite Eingangsarray empfangenen Rückmeldungsinformationen betreiben.

4. Intelligente Antriebseinheit nach Anspruch 2 oder 3, wobei
die Computerplatine in einem wasserdichten Gehäuse (50) umfasst ist und
die Sensorplatine dazu konfiguriert ist, eine Seite des wasserdichten Körpers zu formen.

5. Hydraulisches System (10), umfassend:
die intelligente Antriebseinheit (12) nach einem der Ansprüche 2-4,
wobei das Hydraulikaggregat (61) eine Leistung im Bereich von 0,15 kW bis 7,5 kW aufweist und
wobei das Hydraulikaggregat (61) so angeordnet ist, dass es über direkte hydraulische Verbindungen eine Vielzahl von jeweiligen hydraulischen Stellgliedern hydraulisch verwaltet.

6. Hydraulisches System nach Anspruch 5, wobei
die Vielzahl von jeweiligen hydraulischen Stellgliedern jeweiligen zweiten Sensoren zugeordnet ist, die so angeordnet sind, dass sie Rückmeldungsinformationen der Stellglieder an den hydraulischen Prozesscomputer (21) senden, und
der hydraulische Prozesscomputer (21) dazu konfiguriert ist, eine Bewegungs-/Kraftsteuerung der Vielzahl von jeweiligen hydraulischen Stellgliedern auf der Grundlage der Rückkopplungsinformationen und im geschlossenen Regelkreis über die Ventile (61₁, 67₂, ..., 67ₙ) durchzuführen.

7. Hydraulisches System nach Anspruch 5 oder 6, ferner umfassend:
eine Mensch-Maschine-Schnittstelle (11), die so angeordnet ist, dass sie Funktionen aktiviert oder deaktiviert, Werte und/oder Grenzen einstellt, Warnungen und/oder Alarme kommuniziert,
eine BUS-Verbindung (15), die so angeordnet ist, dass sie die Mensch-Maschine-Schnittstelle mit dem hydraulischen Prozesscomputer verbindet.

8. Betriebsverfahren eines hydraulischen Systems, die folgenden Schritte umfassend:
- Bereitstellen eines Hydraulikaggregats, das eine Leistung im Bereich von 0,15 kW bis 7,5 kW aufweist und Folgendes umfasst:
- eine Hydraulikpumpe vom Typ mit offenem Kreislauf,
- eine Vielzahl von Hydraulikventilen, die direkt mit der Hydraulikpumpe vom Typ mit offenem Kreislauf verbunden sind,
- Bereitstellen eines hydraulischen Prozesscomputers, der darin integriert Folgendes umfasst:
- eine programmierbare Computerplatine und
- eine Sensorplatine, die direkt mit der programmierbaren Computerplatine verbunden ist und einen oder mehrere Sensoren umfasst, die so angeordnet sind, dass sie Betriebsparameter der Pumpe erfassen und Betriebsparameter der Pumpe direkt an die programmierbare Computerplatine zurückmelden wobei der hydraulische Prozesscomputer so angeordnet ist, dass er die hydraulische Pumpe vom Typ mit offenem Kreislauf und die Vielzahl von Ventilen steuert,
- Bereitstellen einer Vielzahl von hydraulischen Stellgliedern, die direkt und jeweils mit der Vielzahl von Ventilen verbunden ist,
- direktes Verwalten der Vielzahl von Stellgliedern über die Vielzahl von Ventilen.

9. Verfahren nach Anspruch 8, ferner die folgenden Schritte umfassend:
- Bereitstellen einer Vielzahl von Stellgliedsensoren (411, 412, ..., 41n), die jeweils der Vielzahl von Stellgliedern (141, 142, ..., 14n) zugeordnet sind, um Rückmeldungsinformationen von der Vielzahl von Stellgliedsensoren an den hydraulischen Prozesscomputer (21) zu senden,
- Durchführen einer Bewegungs-/Kraftsteuerung der Vielzahl von Stellgliedern (141, 142, ..., 14n) im geschlossenen Regelkreis über die Vielzahl von Ventilen (671, 672, ..., 67n) unter der Steuerung des hydraulischen Prozesscomputers (21).

10. Verfahren nach Anspruch 8 oder 9, ferner die folgenden Schritte umfassend:
- Verbinden einer Mensch-Maschine-Schnittstelle (11), die so angeordnet ist, dass sie Funktionen aktiviert oder deaktiviert, Werte und/oder Grenzen einstellt, Warnungen und/oder Alarme kommuniziert, mit dem hydraulischen Prozesscomputer (21) über eine BUS-Verbindung (15).

11. Verfahren nach einem der Ansprüche 8 bis 10, wobei die folgenden Schritte:
- Bereitstellen des hydraulischen Prozesscomputers (21), der die programmierbare Computerplatine (23) und die Sensorplatine (23) darin integriert umfasst, den Schritt eines Bereitstellens eines ersten und eines zweiten Eingangsarrays (31, 32), die j eweils einem ersten und einem zweiten programmierbaren Logikprozessor (33, 34) zugeordnet sind, die miteinander kommunizieren und so angeordnet sind, dass sie eine Kreuz- und Redundanzprüfung der über das erste und das zweite Eingangsarray (31, 32) empfangenen Rückmeldungsinformationen durchführen, umfasst.

12. Verfahren nach einem der Ansprüche 8 bis 11, wobei der folgende Schritt:
- Bereitstellen eines hydraulischen Prozesscomputers (21) die folgenden Schritte umfasst:
- Bereitstellen der Computerplatine (23), so dass sie in einem wasserdichten Körper umfasst ist, und der Sensorplatine (25), so dass sie eine Seite des wasserdichten Körpers (50) formt.

## Revendications

1. Unité d'alimentation intelligente (12) conçue pour gérer un système hydraulique (10), ladite unité d'alimentation intelligente comprenant
- un groupe hydraulique (61) comprenant
- une pompe hydraulique de type à circuit ouvert (65) et
- un moteur électrique (63) conçu pour entraîner la pompe hydraulique,
- un ordinateur de traitement hydraulique (21) comprenant intégré à celui-ci
- une carte informatique programmable (23), et
- une carte capteur (25) directement connectée à la carte informatique programmable et comprenant un ou plusieurs premiers capteurs (51 à 53) conçus pour détecter les paramètres de fonctionnement de la pompe et pour transmettre en rétroaction directement les paramètres de fonctionnement de la pompe à la carte informatique programmable,
dans laquelle
- ledit ordinateur de traitement hydraulique est conçu pour commander ledit moteur électrique.

2. Unité d'alimentation intelligente selon la revendication 1, dans laquelle :
ledit groupe hydraulique comprend en outre une pluralité de vannes hydrauliques (61₁, 67₂, ..., 67ₙ) connectées directement à la pompe, et
dans laquelle ladite pluralité de vannes sont commandées par ledit ordinateur de traitement hydraulique.

3. Unité d'alimentation intelligente selon la revendication 2, dans laquelle ladite carte informatique programmable comprend
un premier et un second processeurs logiques programmables (33, 34) et
un premier et un second réseaux d'entrée (31, 32), chacun respectivement associé aux premier et second processeurs logiques programmables,
les premier et second processeurs logiques programmables communiquant entre eux et étant conçus pour effectuer un contrôle croisé et redondant des informations de rétroaction reçues par le biais des premier et second réseaux d'entrée.

4. Unité d'alimentation intelligente selon la revendication 2 ou 3 dans laquelle
ladite carte informatique est comprise dans un corps étanche (50), et
ladite carte capteur est configurée pour former un côté dudit corps étanche.

5. Système hydraulique (10) comprenant :
l'unité d'alimentation intelligente (12) selon l'une quelconque des revendications 2 à 4,
ledit groupe hydraulique (61) comportant une puissance allant de 0,15 kW à 7,5 kW et
ledit groupe hydraulique (61) étant conçu pour gérer hydrauliquement, par le biais de connexions hydrauliques directes, une pluralité d'actionneurs hydrauliques respectifs.

6. Système hydraulique selon la revendication 5, dans lequel :
ladite pluralité d'actionneurs hydrauliques respectifs sont associés à des seconds capteurs respectifs conçus pour envoyer des informations de rétroaction des actionneurs audit ordinateur de traitement hydraulique (21), et
ledit ordinateur de traitement hydraulique (21) est configuré pour effectuer une commande de mouvement/force de la pluralité d'actionneurs hydrauliques respectifs sur la base desdites informations de rétroaction et en boucle fermée, par le biais desdites vannes (61₁, 67₂, ..., 67ₙ).

7. Système hydraulique selon la revendication 5 ou 6, comprenant en outre :
une interface homme-machine (11) conçue pour activer ou désactiver des fonctions, définir des valeurs et/ou des limites, communiquer des avertissements et/ou des alarmes,
une connexion BUS (15) conçue pour connecter ladite interface homme-machine audit ordinateur de traitement hydraulique.

8. Procédé de fonctionnement d'un système hydraulique comprenant les étapes de :
- fourniture d'un groupe hydraulique comportant une puissance comprise entre 0,15 kW et 7,5 kW et comprenant
- une pompe hydraulique du type à circuit ouvert,
- une pluralité de vannes hydrauliques directement connectées à la pompe hydraulique du type à circuit ouvert ;
- fourniture d'un ordinateur de traitement hydraulique comprenant intégré à celui-ci,
- une carte informatique programmable, et
- une carte capteur directement connectée à la carte informatique programmable et comprenant un ou plusieurs capteurs conçus pour détecter les paramètres de fonctionnement de la pompe et pour transmettre en rétroaction directement les paramètres de fonctionnement de la pompe à la carte informatique programmable, ledit ordinateur de traitement hydraulique étant conçu pour commander ladite pompe hydraulique du type à circuit ouvert et ladite pluralité de vannes,
- fourniture d'une pluralité d'actionneurs hydrauliques directement et respectivement connectés à ladite pluralité de vannes,
- gestion directe de ladite pluralité d'actionneurs par le biais de ladite pluralité de vannes.

9. Procédé selon la revendication 8, comprenant en outre les étapes de :
- fourniture d'une pluralité de capteurs d'actionneurs (411, 412, ..., 41n) respectivement associés à ladite pluralité d'actionneurs (141, 142, ..., 14n) pour envoyer des informations de rétroaction provenant de ladite pluralité de capteurs d'actionneurs audit ordinateur de traitement hydraulique (21),
- exécution d'une commande de mouvement/force de la pluralité d'actionneurs (141, 142, ..., 14n) en boucle fermée par le biais de ladite pluralité de vannes (671, 672, ..., 67n) sous le contrôle dudit ordinateur de traitement hydraulique (21).

10. Procédé selon la revendication 8 ou 9, comprenant en outre les étapes de :
- connexion d'une interface homme-machine (11), conçue pour activer ou désactiver des fonctions, définir des valeurs et/ou des limites, communiquer des avertissements et/ou des alarmes, audit ordinateur de traitement hydraulique (21) par le biais d'une connexion BUS (15).

11. Procédé selon l'une quelconque des revendications 8 à 10, dans lequel les étapes de :
- fourniture dudit ordinateur de traitement hydraulique (21), comprenant intégrées à celui-ci la carte d'ordinateur programmable (23) et la carte capteur (23), comprend l'étape de fourniture d'un premier et d'un second réseaux d'entrée (31, 32), chacun respectivement associé à un premier et un second processeurs logiques programmables (33, 34) communiquant entre eux et conçus pour effectuer un contrôle croisé et redondant des informations de rétroaction reçues par le biais des premier et second réseaux d'entrée (31, 32).

12. Procédé selon l'une quelconque des revendications 8 à 11, dans lequel l'étape de :
- fourniture d'un ordinateur de traitement hydraulique (21) comprend les étapes de :
- fourniture de la carte informatique (23) de manière à ce qu'elle soit comprise dans un corps étanche et de ladite carte capteur (25) de manière à ce qu'elle forme un côté du corps étanche (50).
